(19) Europäisches Patentamt
European Patent Office
Office européen des brevets

(11)  **EP 2 214 071 B1**

(12)  **EUROPÄISCHE PATENTSCHRIFT**

(45) Veröffentlichungstag und Bekanntmachung des Hinweises auf die Patenterteilung:
**10.04.2013 Patentblatt 2013/15**

(51) Int Cl.:
*G05B 23/02* *(2006.01)*      *F24D 19/10* *(2006.01)*
*G05D 23/19* *(2006.01)*

(21) Anmeldenummer: **10151330.7**

(22) Anmeldetag: **21.01.2010**

(54) **Verfahren und Vorrichtung zur Überwachung der Heizkurve einer Heizungsanlage**

Method and device for monitoring the heating curve of a heating assembly

Procédé et dispositif destinés à la surveillance de la courbe de chauffe d'une installation de chauffage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **31.01.2009 DE 102009006918**

(43) Veröffentlichungstag der Anmeldung:
**04.08.2010 Patentblatt 2010/31**

(73) Patentinhaber: **Techem Energy Services GmbH**
**65760 Eschborn (DE)**

(72) Erfinder: **Ohl, Jochen, Dr.**
**64823 Groß-Umstadt (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
**EP-A1- 0 632 356      EP-A2- 2 093 644**
**DE-A1- 3 210 428**

**Beschreibung**

Die Erfindung betrifft ein Verfahren und eine Vorrichtung zur Überwachung der Heizkurve bzw. Heizkennlinie einer Heizungsanlage, insbesondere auf Änderungen in der Einstellung der Heizkurve oder Störungen.

Die meisten Heizungsanlagen weisen eine außentemperaturgeführte Heizungsregelung bzw. -steuerung auf, die eine Vorlauftemperatur entsprechend einer gemessenen Außentemperatur vorgibt. Den Zusammenhang zwischen der gemessenen Außentemperatur und der durch die Heizungsregelung eingestellten Vorlauftemperatur wird durch eine sogenannte Heizungskurve bzw. Heizkurve vorgegeben, die bei Einrichtung der Heizungsanlage durch den Installateur korrekt eingestellt werden soll.

In der Praxis hat sich jedoch gezeigt, dass die Heizkurve meist eine zu hohe Vorlauftemperatur bezogen auf die gemessene Außentemperatur vorgibt, um mögliche Komfortbeanstandungen durch die Nutzer der Liegenschaft von Vorneherein entgegenzuwirken oder auf solche zu reagieren. Dies führt jedoch zu einem erhöhten Energieverbrauch und ist daher nachteilig.

Um eine bessere Anpassung der Vorlauftemperatur an die in der Liegenschaft tatsächlich benötigte Wärmeleistung zu erreichen, werden beispielsweise in der EP 1 456 727 B1 und der EP 1 645 928 A1 wärmeleistungsadaptive Vorlauftemperaturregelungen beschrieben, die den tatsächlichen Wärmeleistungsbedarf in der Liegenschaft ermitteln bzw. abschätzen und eine entsprechend angepasste Vorlauftemperatur vorgeben. Das Vorgeben der Vorlauftemperatur erfolgt meist durch Ermittlung eines Korrekturwertes, mit dem die durch die Heizungsregelung mittels der Heizkurve vorgegebene Vorlauftemperatur korrigiert werden soll.

In der Praxis wird die Heizkurve auch nach der Installation und Inbetriebnahme der Heizung beispielsweise bei Wartungen der Heizungsanlage oder durch die Nutzer selbst häufig verstellt, meist hin zu höheren Vorlauftemperaturen. Auf diese Weise wird das Einsparpotenzial der wärmeleistungsadaptiven Vorlauftemperaturregelung mit Begrenzung der Absenkung vermindert oder nicht erreicht. Eine Veränderung der Heizkurve, die zu einer niedrigeren Vorlauftemperatur führt, kann dagegen Komforteinbußen nach sich ziehen und zu Nutzerbeschwerden führen.

Die DE 32 10 428 A1 beschreibt ein Verfahren und eine Einrichtung zur Optimierung der Heizkurve einer Heizungsanlage. Bei diesem Verfahren werden Messwerttripel, bestehend aus Außentemperatur, Vorlauftemperatur und Raumtemperatur genutzt, um im gesamten Temperaturbereich die Heizkurve in einfacher Weise durch eine Polynom anzunähern und die Heizkurve dabei zu optimieren. Sich in der Raumtemperatur zeigende Störgrößen, bspw. durch eine Fensterlüftung oder viele im Raum anwesende Personen, fallen bei einer großen Anzahl von Messwerttripeln nicht ins Gewicht.

Die EP 0 632 356 A1 stellt ein Verfahren zur selbständigen Heizkurvenoptimierung vor. Ziel ist es, die ein Gebäude beeinflussende Fremdenergie bei der Heizkurvenoptimierung zu berücksichtigen. Hierzu wird die Heizkurvengleichung als Potentialfunktion beschrieben, deren Parameter mit Hilfe von Messwerttripeln aus Außentemperatur, Vorlauftemperatur und Zimmertemperatur bestimmt werden.

Aufgabe der vorliegenden Erfindung ist es daher, eine Möglichkeit vorzusehen, Änderungen der Heizkurve einer Heizungsanlage auf einfache und kostengünstige Weise im laufenden Betrieb festzustellen.

Diese Aufgabe wird erfindungsgemäß mit den Merkmalen der Ansprüche 1 und 11 gelöst.

Bei dem dazu vorgeschlagenen Verfahren werden fortlaufend Wertepaare aus einer (in der Heizungsanlage ohnehin) gemessenen Vorlauftemperatur und ' einer (in der Heizungsanlage ohnehin) gemessenen Außentemperatur gebildet und eine Schätzfunktion an eine ausgewählte Anzahl von Wertepaaren mittels einer Parameterermittlung bzw. -schätzung (Fit) angepasst. Neue, d.h. nach Anpassung der Schätzfunktion gebildete, Messwertpaare werden auf Kompatibilität mit der Schätzfunktion überprüft. Bei der Schätzfunktion kann es sich in einfacher Weise um eine Regressionsgerade handeln.

Auf diese Weise ist es möglich, Änderungen an der Einstellung der Heizkurve bzw. -kennlinie gegenüber der Schätzfunktion festzustellen, weil die nach Veränderung der Einstellung der Heizkennlinie erhaltenen Wertepaare nicht mehr innerhalb eines vorgegebenen Toleranzbereichs um die Schätzfunktion liegen. Neben Veränderungen der Heizkurve (die auch als Heizungskennlinie bezeichnet wird) können mit diesem Verfahren auch Anlagenstörungen erkannt werden, die zu einer plötzlich abweichenden Vorlauftemperatur führen. Insbesondere wird ein Heizungsausfall schnell festgestellt, so dass eine Reparatur zügig in die Wege geleitet werden kann.

Erfindungsgemäß wird nach Bildung eines neuen Messwertpaares die Abweichung des Messwertpaares von der Schätzfunktion ermittelt, insbesondere indem der Funktionswert der Schätzfunktion für einen Messwert des Messwertpaares (typischerweise die Außentemperatur) mit dem anderen Messwert des Messwertpaares (typischerweise der gemessenen Vorlauftemperatur) verglichen und die Abweichung anhand eines festgelegten Grenzwertes bewertet wird. Hierbei handelt es sich um eine Messwert-Änderungsüberwachung, bei der jeder neu eingehende Messwert mit der zugehörigen Schätzfunktion verglichen wird, sofern diese bereits vorliegt. Bei Inbetriebnahme der Anlage muss natürlich das Aufnehmen einiger Messwertpaare abgewartet werden, bis eine ausreichende (ausgewählte) Anzahl von Wertepaaren für die Parameterschätzung der Schätzfunktion vorliegt. Um mit möglichst wenigen Parametern der Schätzfunktion auszukommen, kann die Heizkurve vorzugsweise durch eine Gerade (Regressionsgerade) angenähert werden.

Gemäß einer alternativen oder zusätzlich durchgeführten Überwachung kann auch vorgesehen werden, dass nach Erreichen der ausgewählten Anzahl neuer Messwertpaare eine Schätzfunktion an die neuen Messwertpaare angepasst und die Abweichung der (neuen) Schätzfunktion zu der zuvor bzw. zuletzt ermittelten, alten Schätzfunktion ermittelt wird. Insbesondere kann hierzu die mittlere Abweichung des Funktionswertes der neuen Schätzfunktion zu dem Funktionswert der alten Schätzfunktion, insbesondere für denselben aktuellen Außentemperaturwert, ermittelt werden. Die mittlere Abweichung kann beispielsweise durch Berechnung der mittleren quadratischen Abweichung der Differenz der aus den beiden Schätzfunktionen berechneten Funktionswerte für einen Messwert des Messwertpaares, insbesondere die Außentemperatur, bestimmt werden. Ferner ist es möglich, die Abweichung der Parameter der alten und der neuen Schätzfunktion zu bewerten. Jede der vorbeschriebenen Bewertungen kann dabei durch Vergleich mit vorher festgelegten, typischen Grenzwerten festgestellt werden.

Besonders vorteilhaft ist es ferner, nach Inbetriebnahme, Einstellung oder Überprüfung einer Heizungsanlage eine Basis-Schätzfunktion zu ermitteln und dauerhaft zu speichern. Diese Basis-Schätzfunktion bietet eine Bewertungsgrundlage für seit diesem Zeitpunkt vorgenommene Änderungen, wobei natürlich eine bspw. manuell anzustoßenden Möglichkeit für einen Reset und das Bilden einer neuen Basis-Schätzfunktion vorgesehen sein kann, die dann auch wieder dauerhaft gespeichert wird.

In diesem Zusammenhang ist es sinnvoll, vorzugsweise zusätzlich zu den zuvor genannten Überprüfungen auch Abweichungen eines neuen Messwertpaares von der Basis-Schätzfunktion und/oder Abweichungen einer neuen Schätzfunktion von der Basis-Schätzfunktion zu ermitteln. So werden sowohl schleichende Änderungen gegenüber einer Grundeinstellung (im Vergleich zur Basis-Schätzfunktion) als auch dynamische Änderungen des Systems (im Vergleich zu der jeweils unmittelbar zuvor gebildeten Schätzfunktionen) festgestellt.

Um die Genauigkeit der erfindungsgemäß vorgeschlagenen Überprüfung der Heizkurve zu verbessern, kann gemäß einer besonders bevorzugten Ausführungsform auch vorgesehen sein, dass die Außentemperatur in vorgegebene Außentemperaturintervalle eingeteilt wird und die vorstehend erläuterten Überprüfungen vorzugsweise für jedes Außentemperaturintervall separat durchgeführt werden. Dies hat mehrere positive Effekte. Da die Heizkurve typischerweise keine Gerade, sondern eine gekrümmte Funktion ist, werden die für jeweils kleinere Intervalle berechneten Schätzfunktionen besser an die tatsächliche Heizkurve angepasst. Ferner dauert es typischerweise bis zu einem Jahr, bis Messdaten aus den relevanten Temperaturdaten vorliegen, da die Außentemperatur mit den jahreszeitlichen Zyklen schwankt. Durch eine Beschränkung auf kleinere Temperaturintervalle kann die Schätzfunktion in einem kleinen, der jeweiligen Jahreszeit entsprechenden Temperaturintervall daher innerhalb wesentlich kürzer Zeit angepasst werden. So wird eine schnelle Aufnahme der Überprüfung nach Inbetriebnahme der Heizungsanlage ermöglicht.

Ferner können erfindungsgemäß mehrere Schätzfunktionen für unterschiedliche Zeitprofile erstellt werden, wobei die Zeitprofile insbesondere als in einer vorgegebenen Zykluszeit von beispielsweise einem Tag zyklisch aufeinander folgen und unterschiedliche Zeitprofilen beispielsweise für Vormittag, Nachmittag, Abend und Nacht ausgebildet sind. Hierdurch wird berücksichtigt, dass einige Heizungsregelungen derartige Zeitprofile verwenden, um eine Absenkung der Heizkurve zu bestimmten Zeiten, beispielsweise Nachts, vorzunehmen. Dies stellt eine einfache Anpassung an einen von außen vorgegebenen typischen Wärmebedarf dar. Durch Berücksichtung der Zeitprofile auch bei der Überwachung der Heizkurve kann fehlerhaften Änderungsmitteilungen entgegengewirkt werden.

Insbesondere ist es vorteilhaft, eine Änderungsmitteilung immer dann zu erzeugen, wenn die Abweichung der einzelnen Messwertpaare und/oder einer neuen Schätzfunktion einen vorgebbaren Grenzwert überschreitet. Als Grenzwert kann insbesondere ein von dem Außentemperaturintervall, dem Zeitprofil und/oder der Art der Abweichung (resultierend aus einer ereignisorientierten oder einer Messwert-Änderungsüberwachung) abhängender Wert vorgegeben werden.

Mit der Art der Abweichung ist insbesondere eine Unterscheidung zwischen der Abweichung eines einzelnen Messwertpaares oder der Abweichung zwischen zwei Schätzgeraden gemeint. Beispielsweise kann es bei Abweichungen eines einzigen Messwertpaares von der Schätzgeraden erforderlich sein, dass sich diese Abweichung über mehrere, aufeinanderfolgende Zeitprofile ergibt, um zufällige Abweichungen nicht zu berücksichtigen und fehlerhafte Änderungsmitteilungen auszuschließen. Da die Abweichung zwischen zwei Schätzgeraden bei einer ereignisorientierten Änderungsüberwachung bereits auf einer Vielzahl einzelner Messwertpaare beruht, die eine gewisse Mittelung bewirken, können in diesem Fall die Grenzwerte niedriger sein als bei einer durch eine Messwert-Änderungsüberwachung festgestellten Abweichung.

Ferner ist es gemäß einer weiteren Variante des erfindungsgemäßen Verfahrens sinnvoll, dass eine mögliche Korrektur der Vorlauftemperatur durch eine der Heizungsregelung vorgeschaltete Vorlauftemperaturregelung, insbesondere einer wärmeleistungsadaptiven Regelung, wie sie eingangs bereits beschrieben wurde, berücksichtigt wird. Dazu kann insbesondere vorgesehen werden, dass die gemessene Vorlauftemperatur um die angewandte Korrektur der Vorlauftemperatur bereinigt wird, so dass tatsächlich der durch die Heizungsregelung mittels der Heizkurve vorgegebenen Vorlauftemperaturwert ermittelt wird. Durch diese Maßnahme wird die Genauigkeit der Überwachung der Heizkurve weiter erhöht.

Gemäß einer weiteren Variante des vorgeschlagenen Verfahrens kann es sinnvoll sein, die für die Überwachung der Heizkurve benötigten Daten, insbesondere die Messwertpaare aus Außentemperatur und Vorlauftemperatur sowie ggf. eine Vorlauftemperaturkorrektur, mittels üblicher Kommunikationswege (Funk, Mobilfunk, Telefon, etc.) an eine Zentrale zu übermitteln, welche die Überwachung vornimmt. Dies hat den Vorteil, dass das Verfahren nur einmal in der Zentrale implementiert werden muss und dass Änderungen an dem Verfahren nur an einer Implementierung eingepflegt werden müssen. Außerdem kann in der Zentrale mit geringem Aufwand eine Überwachung für ein Vielzahl von Heizungsanlagen geleistet werden. Um die Signale insgesamt besser interpretieren zu können, können zu den übertragenen und/oder ausgewerteten Daten auch Status-signale oder sonstige von der Heizungsanlage und/oder -regelung ausgegebene Signale gehören.

Die Erfindung betrifft ferner eine Vorrichtung gemäß Anspruch 11 zur Überwachung der Heizkurve einer Heizungsanlage mit einem Anschluss zur Erfassung einer gemessenen Vorlauftemperatur und einer gemessenen Außentemperatur sowie ggf. eines von einer vorgeschalteten Vorlauftemperaturregelung erzeugten Korrekturwertes für die Vorlauftemperatur und mit einer Rechteneinrichtung, die insbesondere als Mikroprozessor ausgebildet sein kann. Die Recheneinrichtung ist zur Durchführung des vorbeschriebenen Verfahrens oder von Teilen hiervon eingerichtet und bildet fortlaufend Wertepaare aus einer gemessenen Vorlauftemperatur und einer gemessenen Außentemperatur, ggf. gemittelt über einen vorgegebenen Zeitraum. Sobald eine ausgewählte Anzahl an Wertepaaren vorliegt, wird eine Schätzfunktion an diese Wertepaare angepasst, wobei neue Messwertpaare auf Kompatibilität mit der Schätzfunktion überprüft werden.

Die Vorrichtung kann in einer Heizungsregelung oder einer ggf. der Heizungsregelung vorgeschalteten Vortauftemperaturregelung integriert sein. Vorzugsweise werden dann Änderungsmitteilungen im Rahmen der Überwachung nicht nur an der Regelung angezeigt, sondern auch an eine zentrale Stelle, beispielsweise per E-Mail, übertragen. Die zentrale Stelle kann der Hauseigentümer, Installateur oder eine Überwachungsfirma sein. Ferner ist es möglich, dass die für die Überwachung benötigten Daten, insbesondere die Vorlauftemperatur, die Außentemperatur sowie ggf. ein Vorlauftemperatur-Korrekturwert, verschiedener Anlagen in einer zentralen Einrichtung, beispielsweise einem Leitstand, zusammenlaufen und dort zentral überwacht werden.

Weitere Merkmale, Vorteile und Anwendungsmöglichkeiten der Erfindung ergeben sich aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder ihren Rückbezügen.

Es zeigen:

Fig. 1 ein Flussdiagramm über den Ablauf einer Ausführung des erfindungsgemäßen Verfahrens;

Fig. 2 schematisch eine erfindungsgemäße Vorrichtung, in welcher das vorgeschlagene Verfahren gemäß Fig. 1 implementiert ist;

Fig. 3 einen Graph mit typischen Heizkurven bzw. Heizkennlinien;

Fig. 4 einen Graph mit Messwertpaaren gemäß einer ersten Anlage;

Fig. 5 an die Messwertpaare gemäß Fig. 4 angepasste Schätzfunktionen;

Fig. 6 einen Graph mit Messwertpaaren gemäß einer zweiten Anlage; und

Fig.7 an die Messwertpaare gemäß Fig. 6 angepasste Schätzfuntonen

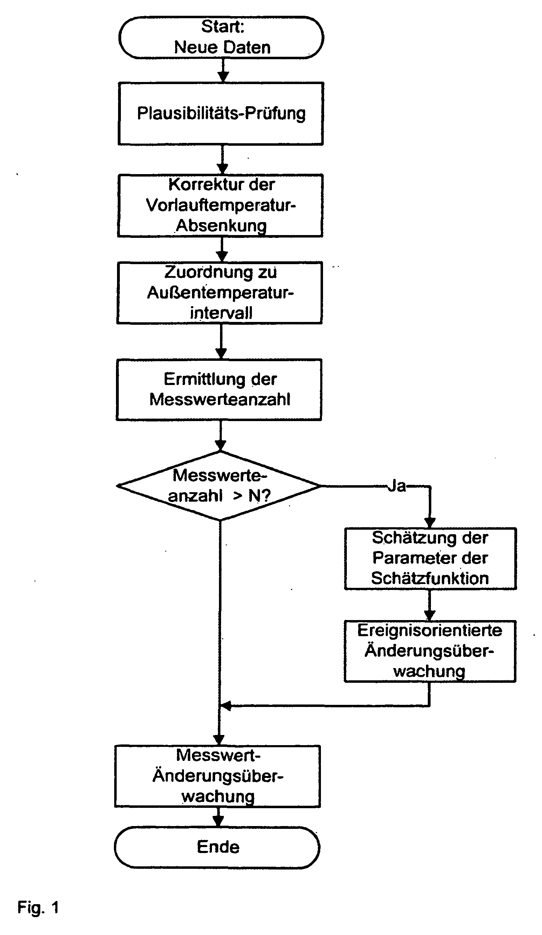

Bei dem in Fig. 1 schematisch skizzierten Verfahren zur Überwachung der Heizkurve einer Heizungsanlage werden fortlaufend aus einer gemessenen Vorlauftemperatur $\vartheta_{Vorlauf}$ und einer gemessenen Außentemperatur $\vartheta_A$ gebildete Wertepaare $[\vartheta_A; \vartheta_{VL}]$ erzeugt.

Zur Bildung der Wertepaare $[\vartheta_A; \vartheta_{VL}]$ wird dem Verfahren zusätzlich zu den gemessenen Temperaturen $\vartheta_{Vorlauf}$, $\vartheta_A$ ggf. auch ein Vorlauftemperatur-Korrekturwert $\Delta\vartheta_{Vorlauf}$ übermittelt, der von einer der Heizungsregelung der Heizungsanlage vorgeschalteten Vorlauftemperaturregelung erzeugt und um den die gemessene Vorlauftemperatur korrigiert wird.

Sobald neue Werte dieser Daten vorliegen, startet der Verfahrensablauf. Die von der Heizungsanlage übermittelten bzw. daraus abgerufenen Daten werden zunächst einer Plausibilitäts-Prüfung unterzogen, wobei insbesondere überprüft wird, ob die Temperaturwerte $\vartheta_{Vorlauf}$, $\vartheta_A$ und/oder $\Delta\vartheta_{Vorlauf}$ innerhalb eines sinnvollen Wertebereichs liegen.

Anschließend wird eine Korrektur der Vorlauftemperatur-Absenkung bzw. - Erhöhung vorgenommen, die auf dem Vorlauftemperatur-Korrekturwert $\Delta\vartheta_{Vorlauf}$ der wärmeleistungsadaptiven Vorlauftemperaturregelung beruht. Diese simuliert eine Verschiebung der Heizkurve und würde ohne Korrektur daher bei der Überprüfung zu Fehlern führen. Die Korrektur wird einfacher Weise durch die Beziehung

$$\vartheta_{VL} = \vartheta_{Vorlauf} - \Delta\vartheta_{Vorlauf}$$

vollzogen, wobei für die weiteren Berechnungen als Vorlauftemperatur-Wert die korrigierte Vorlauftemperatur $\vartheta_{VL}$ verwendet wird.

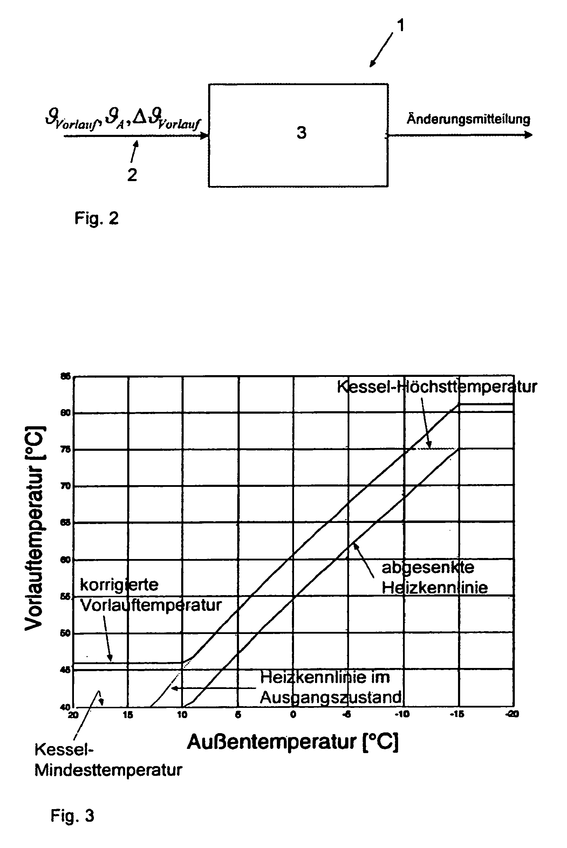

Hierbei kommt es, wie anhand von Fig. 3 nachfolgend erläutert, bei einer in der Heizungsregelung möglicher Weise vorgesehenen Kessel-Mindesttemperatur und/oder Kessel-Höchsttemperatur zu Fehlern in der Rekonstruktion der korrigierten Vorlauftemperatur $\vartheta_n$, die sich auf die Überwachung der Heizkurve jedoch nicht auswirken.

Die gemessene Vorlauftemperatur $\vartheta_{vorlauf}$ wird um die meist eine Absenkung der Vorlauftemperatur bewirkende Vorlauftemperatur-Korrektur $\Delta\vartheta_{vorlauf}$ auch dann korrigiert, wenn diese Absenkung wegen einer in der Heizungsregelung vorgegebenen Kessel-Mindesttemperaturvorgabe nicht umgesetzt wurde. Die korrigierte Vorlauftemperatur wäre in diesem Fall zu hoch. Entsprechendes gilt bei einer Maximaltemperaturbegrenzung durch eine Kessel-Höchsttemperatur der Heizungsregelung.

Dies kann Fig. 3 entnommen werden, welche eine Heizkennlinie im Ausgangszustand mit einer Kessel-Mindesttemperatur von 40°C und einer Kessel-Höchsttemperatur von 75°C zeigt. Ferner ist eine über den gesamten Außentemperaturbereich um 6 Kelvin abgesenkte Heizkennlinie dargestellt, die jedoch bei der Kessel-Mindesttemperatur und der Kessel-Höchsttemperatur mit der Heizkennlinie im Ausgangszustand zusammenfällt.

Die rekonstruierte Kennlinie bzw. korrigierte Vorlauftemperatur liegt mit einem Fehler jeweils im Bereich der Minimum- und der Maximum-Begrenzung wiederum auf der Heizkennlinie im Ausgangszustand. In einem Temperaturbereich von etwa 10°C bis -15°C wirkt sich eine Änderung der Steigung oder des Niveaus der Heizkennlinie jedoch entsprechend aus und kann somit auch bei Anwendung dieser (in dem Bereich der Kessel-Mindesttemperatur bzw. der Kessel-Höchsttemperatur) fehlerhaften Rekonstruktion bei der Überprüfung erkannt werden. Änderungen der Minimum- bzw. Maximum-Begrenzung führen einer Verschiebung der rekonstruierten Heizkennlinie in diesem Bereich und können ebenfalls erkannt werden, auch wenn das absolute Niveau der Heizkennlinie in diesem Bereich nicht richtig ist. Für die Feststellung der Änderung in der Einstellung der Heizkurve ist die vorgenommene Korrektur daher ausreichend.

In dem nächsten Verfahrensschritt findet eine Zuordnung des wie vorstehend erläutert gebildeten Wertepaares $[\vartheta_A;\vartheta_{VL}]$ zu einem Außentemperaturintervall statt. Um die Genauigkeit zu erhöhen und möglichst schnell ausreichend viele Daten zur Anpassung einer Schätzfunktion $\vartheta_{VL,est}(\vartheta_A)$ zu erhalten, wird der gesamte Außentemperaturbereich in Intervalle eingeteilt, wobei die Überprüfung der Heizkurve für jedes Temperaturintervall gesondert erfolgt. Je nach gemessener Außentemperatur wird ein Wertepaar einem Außentemperaturintervall zugeordnet, wobei die Intervalle gleich groß sein können oder alternativ an die relative Häufigkeit der in das Temperaturintervall fallenden Wertepaare $[\vartheta_A;\vartheta_{VL}]$ angepasst werden. Für die Einordnung eines Wertepaares $[\vartheta_A;\vartheta_{VL}]$ in ein Intervall kann auch die mittlere Außentemperatur über einen vorgegebenen Zeitraum zugrunde gelegt werden.

Im nächsten Verfahrensschritt wird dann nach der Zuordnung eines neuen Messwertpaares die Anzahl $N_{Mess}$ der neuen Messwertpaare $[\vartheta_A;\vartheta_{VL}]$ des jeweiligen Außentemperaturintervalls, d.h. der Messwertpaare $[\vartheta_A;\vartheta_{VL}]$, die noch nicht für die Anpassung einer Schätzfunktion $\vartheta_{VL,est}(\vartheta_A)$ verwendet wurden, überprüft.

Liegt diese Anzahl $N_{Mess}$ über einem Grenzwert $N$ für die Anzahl neuer Messwertpaare $[\vartheta_A;\vartheta_{VL}]$, wird eine Schätzung der Parameter der Schätzfunktion $\vartheta_{VL,est}(\vartheta_A)$ vorgenommen, um eine neue Schätzfunktion $\vartheta_{VL,est\_neu}(\vartheta_A)$ zu ermitteln.

In dem dargestellten Beispiel wird als Schätzfunktion $\vartheta_{VL,est}(\vartheta_A)$ eine Regressionsgerade verwendet, ohne dass die Erfindung auf diese spezielle Form der Schätzfunktion $\vartheta_{VL,est}(\vartheta_A)$ beschränkt ist.

Die Gleichung der Regressionsgeraden lautet in der allgemeinen Form:

$$\vartheta_{VL,est}(\vartheta_A) = m \cdot \vartheta_A + b$$

und gibt als $\vartheta_{VL,est}$ die auf Basis der geschätzten Parameter der Regressionsgeraden berechnete Vorlauftemperatur. Die Parameter der Regressionsgeraden sind die Steigung $m$ und der y-Achsenabschnitt $b$.

Für jedes Außentemperaturintervall werden vorzugsweise nach der Methode der kleinsten Quadrate die vorstehenden Parameter der Regressionsgeraden geschätzt, wobei die Schätzung für eine oder mehrere zusammengefasste Profilzeiten getrennt ermittelt werden.

Als Profilzeiten gelten die im Tages-Zyklus eingeteilten Zeiten Vormittag, Nachmittag, Abend und Nacht, zu denen die Heizungsanlagen häufig unterschiedliche Vorlauftemperaturen $\vartheta_{Vorlauf}$ durch Anpassung der Heizkurve bzw. -kennlinie vornehmen. Ggf. kann ein Tages-Zyklus auch in einer andere, abweichende Anzahl von Profilzeiten, bspw.

nur Tag und Nacht, eingeteilt werden.

Messwertpaare $[\vartheta_A;\vartheta_{VL}]$, die bereits für eine Schätzung der Parameter einer Schätzfunktion $\vartheta_{VL,est}(\vartheta_A)$ verwendet wurden, werden für weitere Parameterschätzungen nicht mehr verwendet. Für die Parameterschätzung einer neuen Schätzfunktion $\vartheta_{VL,est\_neu}(\vartheta_A)$ werden also immer nur die $N_{Mess}$ letzten Messwertpaare $[\vartheta_A;\vartheta_{VL}]$ eines Außentemperaturintervalls verwendet.

Bei der ereignisorientierten Änderungsüberwachung der Heizkurve bzw. Heizkennlinie wird ein Vergleich der neu ermittelten Schätzfunktion $\vartheta_{VL,est\_neu}(\vartheta_A)$ mit der zuvor ermittelten, alten Schätzfunktion $\vartheta_{VL,est\_alt}(\vartheta_A)$ vorgenommen. Die Überwachung wird also ausgelöst, sobald für ein bestimmtes Außentemperaturintervall die vorbestimmte Anzahl $N$ neuer Messwertpaare $[\vartheta_A;\vartheta_{VL}]$ vorliegt und bereits eine erste Schätzung der Parameter der Schätzfunktion $\vartheta_{VL,est}(\vartheta_A)$ für das betreffende Außentemperaturintervall erfolgt ist.

Zusätzlich wird nach Inbetriebnahme oder Wartung der Heizungsanlage bei dem erstmaligen Vorliegen der benötigten Anzahl $N$ neuer Messwertpaare $[\vartheta_A;\vartheta_{VL}]$ die erste Schätzung der Parameter als Basis-Schätzfunktion $\vartheta_{VL,est\_alt}(\vartheta_A)$ dauerhaft gespeichert, um auch sich nur langfristig auswirkende Änderungen an der Heizkurve feststellen zu können.

Daher ist es bei der ereignisorientierten Änderungsüberwachung sinnvoll, zusätzlich einen Vergleich der neuen Schätzfunktion $\vartheta_{VL,est\_neu}(\vartheta_A)$ mit dieser Basis-Schätzfunktion $\vartheta_{VL,est\_alt}(\vartheta_A)$ vorzunehmen, der wie vorbeschrieben erfolgt.

Die ereignisorientierten Änderungsüberwachung kann erst dann durchgeführt werden, wenn eine erste Schätzung für die Parameter der Schätzfunktion $\vartheta_{VL,est\_alt}(\vartheta_A)$ (Basis-Schätzfunktion) im betreffenden Außentemperaturintervall vorliegt.

Bei der ereignisorientierten Änderungsüberwachung wird die neue Schätzfunktion $\vartheta_{VL,est\_neu}(\vartheta_A)$ im Außentemperaturintervall (geschätzte Heizkennlinie) mit der zuvor geschätzten Schätzfunktion $\vartheta_{VL,est\_alt}(\vartheta_A)$ und/oder der Basis-Schätzfunktion $\vartheta_{VL,est\_alt}(\vartheta_A)$ in dem gleichen Außentemperaturintervall verglichen:

$$\Delta_{est\_alt/est\_neu}{}^2 = \frac{1}{N}\sum_{n=1}^{N}\left[\vartheta_{VL,est\_alt}(\vartheta_A(n)) - \vartheta_{VL,est\_neu}(\vartheta_A(n))\right]^2$$

Dabei ist $\Delta_{est\_alt/est\_neu}{}^2$ die mittlere quadratische Abweichung zwischen der neu ermittelten Schätzfunktion $\vartheta_{VL,est\_neu}(\vartheta_A)$ und der alten Schätzfunktion $\vartheta_{VL,est\_alt}(\vartheta_A)$, die sowohl die letzte, vor der neuen ermittelten Schätzfunktion als auch die Basis-Schätzfunktion sein kann. $\vartheta_{VL,est\_alt}(\vartheta_A)$ und $\vartheta_{VL,est\_neu}(\vartheta_A)$ sind entsprechend die alte und die neue Schätzfunktion.

Es ist sinnvoll, die Überwachung der Heizkurve sowohl mit der zuvor ermittelten Schätzfunktion als auch mit der Basis-Schätzfunktion durchzuführen. Der Vergleich mit der zuvor ermittelten Schätzfunktion ermöglich es, dynamische Änderungen in dem System schnell zu erkennen. Dazu zählt sowohl ein Ausfall oder eine Störung der Heizungsanlage als auch eine deutliche Verstellung der Heizkurve beispielsweise durch einen Nutzer selbst. Durch den Vergleich mit der Basis-Schätzgeraden werden auch mehrmalige, nacheinander erfolgende und jeweils geringfügige Änderungen in der Einstellung der Heizkurve erkannt, die durch den Vergleich mit der jeweils letzten Schätzgeraden aufgrund der Geringfügigkeit der Abweichungen unter Umständen nicht erkannt werden können.

Durch den Vergleich der neuen Schätzfunktion mit der Basis-Schätzfunktion können also auch Änderungen ermittelt werden, die in kleinen Schritten über einen längeren Zeitraum erfolgen.

Im Rahmen der ereignisorientierten Änderungsüberwachung findet anschließend eine Bewertung der mittleren Abweichung $\Delta_{est\_alt/est\_neu}{}^2$ der aktuelle geschätzten, neuen Schätzfunktion $\vartheta_{VL,est\_neu}(\vartheta_A)$ mit der zuvor geschätzten Schätzfunktion $\vartheta_{VL,est\_alt}(\vartheta_A)$ statt, um auf Änderungen in der Einstellung der Heizkurve zu schließen und ggf. eine entsprechende Änderungsmitteilung auszulösen. Dies geschieht anhand einer Schwellwertüberwachung, indem ein Grenzwert für die mittlere quadratische Abweichung $\Delta_{est\_alt/est\_neu}{}^2$ vorgegeben wird, der anpassbar ist und ggf. auch von der Art der Überwachung (Vergleich mit der zuvor ermittelten Schätzfunktion, Vergleich mit der Basis-Schätzfunktion, Profilzeiten, etc.) abhängt.

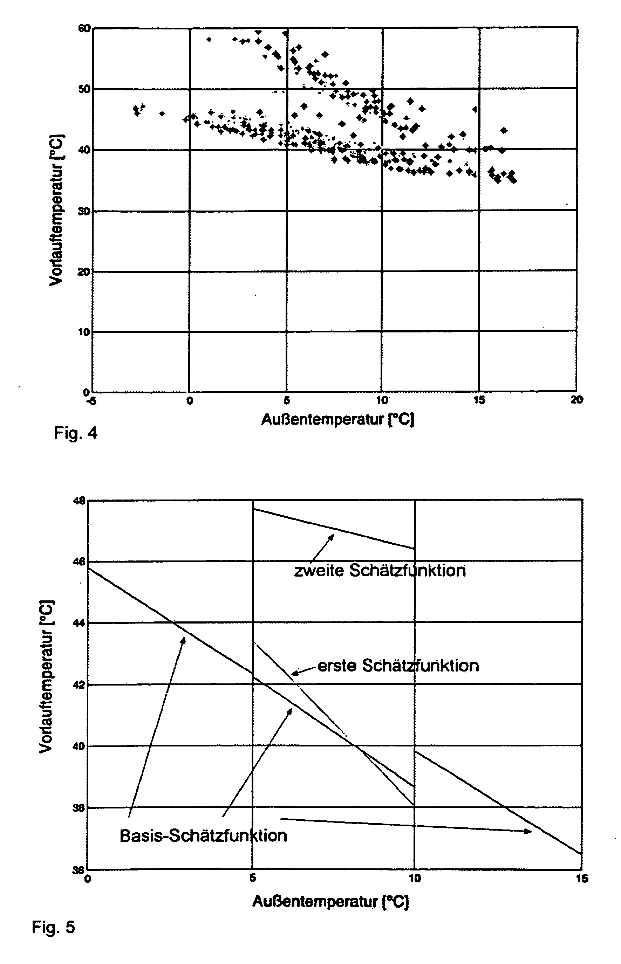

In den Fig. 4 bis 7 sind Beispiele von Messdaten aus Heizungsanlagen sowie die zugehörigen, intervallweise geschätzten Schätzfunktionen dargestellt. In Fig. 4 ist zu erkennen, dass zwei Gruppen von Messwertpaaren $[\vartheta_A;\vartheta_{VL}]$ vorliegen. Dies deutet darauf hin, dass die Einstellung der Heizkennlinie hin zu höheren Vorlauftemperaturen $\vartheta_{Vorlauf}$ bei niedriger Außentemperatur $\vartheta_A$ verändert wurde. Die aus dem Messwerten angepassten Schätzfunktionen $\vartheta_{VL,est}(\vartheta_A)$ sind in der zugehörigen Fig. 5 dargestellt. Diese zeigt für die drei Temperaturintervalle 0°C bis 5°C, 5°C bis 10°C und 10°C bis 15°C die Basis-Schätzfunktion $\vartheta_{VL,est\_alt}(\vartheta_A)$, welche den Verlauf der Kennlinie bzw. Heizkurve abschnittsweise wiedergibt. In dem mittleren Temperaturintervall von 5°C bis 10°C sind zwei weitere, neue Schätzfunktionen $\vartheta_{VL,est\_neu}(\vartheta_A)$ dargestellt. Die erste neue Schätzfunktion $\vartheta_{VL,est\_neu}(\vartheta_A)$ zeigt, dass die Steilheit der Schätzfunktion $\vartheta_{VL,est\_neu}(\vartheta_A)$ gegenüber der Basis-Schätzfunktion $\vartheta_{VL,est\_alt}(\vartheta_A)$ verändert wurde. Bei der zweiten neuen Schätzfunk-

tion $\vartheta_{VL,est\_neu}(\vartheta_A)$ wurde sowohl die Steigung m der Schätzfunktion $\vartheta_{VL,est\_neu}(\vartheta_A)$ verändert als auch die Schätzkurve $\vartheta_{VL,est\_neu}(\vartheta_A)$ parallel verschoben (Änderung des y-Achsenabschnitts b). In den verbleibenden Temperaturintervallen von 0°C bis 5°C und 10°C bis 15°C liegt die ausreichende Anzahl N von Messwerten noch nicht für die Anpassung einer neuen Schätzfunktion vor.

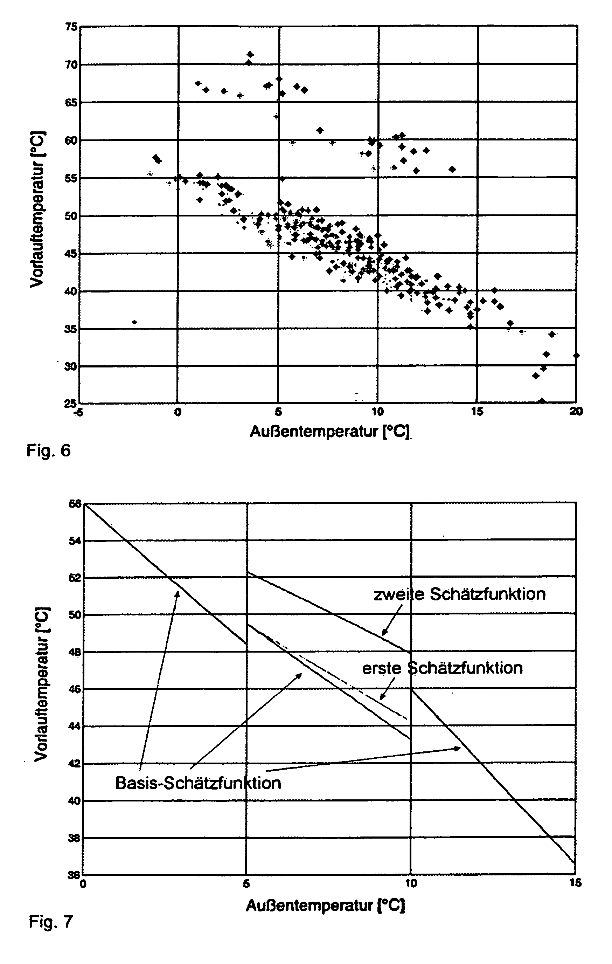

Fig. 6 und 7 zeigen ein entsprechendes Verhalten für eine andere Heizungsanlage. Auf eine genauere Erläuterung der Fig. 6 und 7 wird daher verzichtet.

Nach Durchführung der ereignisorientierten Änderungsüberwachung wird die Messwertanzahl $N_{Mess}$ der seit der letzten Schätzung der Parameter der Schätzfunktion neuen Messwertpaare $[\vartheta_A;\vartheta_{VL}]$ auf Null gesetzt.

Die Überwachung der Heizkurve wird anschließend mit einer Messwert-Änderungsüberwachung fortgesetzt, die vorzugsweise für jedes Messwertpaar $[\vartheta_A;\vartheta_{VL}]$ durchgeführt wird, wobei ein Messwertpaar $[\vartheta_A;\vartheta_{VL}]$ natürlich auch aus einer Mittlung verschiedener Einzelmesswerte bestehen kann.

Nach Erhalt der Daten, beispielsweise im Rahmen einer täglichen Überwachung, wird überprüft, wie weit die Vorlauftemperaturen $\vartheta_{VL}$ von den bei der gleichen Außentemperatur $\vartheta_A$ anhand der Schätzfunktion $\vartheta_{VL,est}(\vartheta_A)$ ermittelten Werten $\vartheta_{VL,est}$ entfernt sind, wobei eine Aufteilung nach verschiedenen Profilzeiten vorgenommen werden kann. Wird ein vorgegebener Grenzwert in mehreren aufeinanderfolgenden Profilzeiten und/oder jeweils denselben Profilzeiten in aufeinanderfolgenden Profilzyklen (Tagen) über- oder unterschritten, wird eine entsprechende Änderungsmitteilung ausgelöst. Wie bei der zuvor erläuterten ereignisorientierten Änderungsüberwachung erfolgt auch bei der Messwert-Änderungsüberwachung vorzugsweise jeweils ein Vergleich gegenüber den Vorlauftemperaturen sowohl der letzten geschätzten Schätzfunktion $\vartheta_{VL,est}(\vartheta_A)$ bzw. $\vartheta_{VL,est\_neu}(\vartheta_A)$ als auch der nach in Betriebnahme geschätzten Basis-Schätzfunktion $\vartheta_{VL,est\_alt}(\vartheta_A)$.

Auch hier können Vergleiche erst durchgeführt werden, wenn eine erste Schätzung $\vartheta_{VL,est\_alt}(\vartheta_A)$ (Basis-Schätzfunktion) für die Heizkurve im jeweils betreffenden Außentemperaturintervall vorliegt.

Die Änderung $\Delta_{akt/est}$ der aktuellen Vorlauftemperatur $\vartheta_{VL}$ gegenüber der Vorlauftemperatur $\vartheta_{VL,est}$, die sich aus der angepassten Schätzfunktion $\vartheta_{VL,est}(\vartheta_A)$ bei der aktuellen Außentemperatur $\vartheta_A$ ergibt, wird wie folgt bestimmt:

$$\Delta_{akt/est} = \vartheta_{VL}(\vartheta_A) - \vartheta_{VL,est}(\vartheta_A),$$

wobei $\vartheta_{VL}$ der um den Vorlauftemperatur-Korrekturwert $\Delta\vartheta_{Vorlauf}$ der Vorlauftemperaturregelung korrigierte, gemessene Vorlauftemperaturwert und $\vartheta_{VL,est}$ der aufgrund der Schätzfunktion $\vartheta_{VL,est}(\vartheta_A)$ geschätzte Vorlauftemperaturwert bei gegebener Außentemperatur $\vartheta_A$ ist. Die Änderung kann sich, wie zuvor bereits für die ereignisorientierte Änderungsüberwachung beschrieben, sowohl auf die zuletzt ermittelte Schätzfunktion als auch die Basis-Schätzfunktion beziehen. Ferner kann die Änderung $\Delta_{akt/est}$ der aktuellen Vorlauftemperatur $\vartheta_{VL}$ gesondert für verschiedene Zeitprofile ermittelt werden, wobei ggf. auch Profilphasen zusammengefasst werden können.

Die Schätzfunktionen $\vartheta_{VL,est}(\vartheta_A)$ werden jeweils mit den mittleren Außentemperaturen $\vartheta_A$ der Profilzeiten berechnet und mit den mittleren, um den Vorlauftemperatur-Korrekturwert $\Delta\vartheta_{Vorlauf}$ korrigierten Vorlauftemperatur $\vartheta_{VL}$ der Profilzeiten verglichen. Liegt die aktuelle Vorlauftemperatur $\vartheta_{VL}$ außerhalb eines vorgegebenen Toleranzbandes, wird eine Änderungsmitteilung ausgegeben. Zur Sicherheit kann hierbei gefordert werden, dass bei mehreren Profilzeiten eine bestimmte Anzahl von Profilzeiten außerhalb des Toleranzbandes liegen muss, um zufällige Abweichungen auszugleichen.

Mit dem erfindungsgemäß vorgeschlagenen Verfahren ist es also möglich, Änderungen der Heizungsanlage bzw. der Heizkurve mit zur Verfügung stehenden Messwerten wirkungsvoll zu überwachen.

Eine hierfür geeignete Vorrichtung 1 ist in Fig. 2 dargestellt. Die Vorrichtung 1 weist einen Anschluss 2 auf, über den die Eingangsgrößen $\vartheta_{Vorlauf}$, $\vartheta_A$, $\Delta\vartheta_{Vorlauf}$ einer Recheneinrichtung 3 der Vorrichtung 1 zugeführt werden. Die Recheneinrichtung 3, die insbesondere als Mikroprozessor ausgebildet sein kann, ist durch entsprechende Programmierung zur Durchführung des zuvor beschriebenen Verfahrens bzw. Teilen hiervon eingerichtet. Ferner weist die Vorrichtung 1 einen Anschluss 4 zur Ausgabe einer Änderungsmitteilung auf.

Die Vorrichtung 1 kann unmittelbar an der Heizungsanlage, beispielsweise integriert in eine wärmeleistungsadaptive Vorlauftemperaturregelung, vorgesehen sein. In diesem Fall findet die erfindungsgemäß vorgeschlagene Überwachung an der Heizungsanlage selbst statt und kann dort angezeigt werden. Um eine ständige Überwachung sicherzustellen, kann diese Vorrichtung 1 über den Anschluss 4 dann auch mit einem Leitstand verbunden sein, in welchem eine zeitnahe Überprüfung mehrere überwachter Anlagen stattfindet.

Es ist auch möglich, die Vorrichtung 1 unmittelbar in einem Leitstand vorzusehen, der über eine Kommunikationseinrichtung die Eingangsgrößen $\vartheta_{Vorlauf}$, $\vartheta_A$, $\Delta\vartheta_{Vorlauf}$ an den Anschluss 4 übermittelt bekommt.

**EP 2 214 071 B1**

**Bezugszeichenliste:**

1    Vorrichtung zur Überwachung einer Heizkurve
2    Anschluss
3    Recheneinrichtung
4    Anschluss

| | |
|---|---|
| $\vartheta_{Vorlauf}$ | Vorlauftemperatur |
| $\vartheta_A$ | Außentemperatur |
| $\Delta\vartheta_{Vorlauf}$ | Vorlauftemperatur-Korrekturwert |
| $\vartheta_{VL}$ | korrigierter Vorlauftemperaturwert |
| $\vartheta_{VL,est}$ | aufgrund der Schätzfunktion geschätzter Vorlauftemperaturwert |
| $m$ | Steigung der Regressionsgeraden |
| $b$ | y-Achsenabschnitt der Regressionsgeraden |
| $[\vartheta_A;\vartheta_{VL}]$ | Wertepaar |
| $N_{Mess}$ | Anzahl der neuen Messwertpaare |
| $N$ | Grenzwert N für die Anzahl neuer Messwertpaare |
| $\Delta_{est\_alt/est\_neu}^2$ | mittlere quadratische Abweichung zwischen neuer und alter Schätzfunktion |
| $\Delta_{akt/est}$ | Änderung der aktuellen Vorlauftemperatur gegenüber der angepassten Vorlauftemperatur |
| $\vartheta_{VL,est}(\vartheta_A)$ | Schätzfunktion |
| $\vartheta_{VL,est\_alt}(\vartheta_A)$ | alte Schätzfunktion (zuvor ermittelte Schätzfunktion und/oder Basis-Schätzfunktion) |
| $\vartheta_{VL,est\_neu}(\vartheta_A)$ | neue Schätzfunktion (mit den neuen Messwertpaaren ermittelte Schätzfunktion) |

**Patentansprüche**

1. Verfahren zur Überwachung der Heizkurve einer Heizungsanlage, bei dem fortlaufend Wertepaare ($[\vartheta_A;\vartheta_{VL}]$) aus einer gemessenen Vorlauftemperatur ($\vartheta_{Vorlauf}$) und einer gemessenen Außentemperatur ($\vartheta_A$) gebildet werden und eine Schätzfunktion ($\vartheta_{VL,est}(\vartheta_A)$) an eine ausgewählte Anzahl (*N*) von Wertepaaren ($[\vartheta_A;\vartheta_{VL}]$) angepasst wird, **dadurch gekennzeichnet, dass** neue, nach Anpassung der Schätzfunktion gebildete Messwertpaare ($[\vartheta_A;\vartheta_{VL}]$) auf Kompatibilität mit der Schätzfunktion ($\vartheta_{VL,est}(\vartheta_A)$) überprüft werden, wobei nach Bildung eines neuen Messwertpaares ($[\vartheta_A;\vartheta_{VL}]$) die Abweichung ($\Delta_{akt/est}$) des Messwertpaares ($[\vartheta_A;\vartheta_{VL}]$) von der Schätzfunktion ($\vartheta_{VL,est}(\vartheta_A)$) ermittelt wird und/oder nach Erreichen der ausgewählten Anzahl (N) neuer Messwertpaare ($[\vartheta_A;\vartheta_{VL}]$) eine neue Schätzfunktion ($\vartheta_{VL,nsu}(\vartheta_A)$) an die neuen Messwertpaare ($[\vartheta_A;\vartheta_{VL}]$) angepasst und die Abweichung ($\Delta_{est\_alt/est\_neu}^2$) der neuen Schätzfunktion ($\vartheta_{VL,est\_neu}(\vartheta_A)$) zu der alten Schätzfunktion ($\vartheta_{VL,est\_alt}(\vartheta_A)$) ermittelt wird.

2. Verfahren nach Anspruch 1, **dadurch gekennzeichnet, dass** der Funktionswert ($\vartheta_{VL,est}$) der Schätzfunktion ($\vartheta_{VL,est}(\vartheta_A)$) für einen Messwert ($\vartheta_A$) des Messwertpaares ($[\vartheta_A;\vartheta_{VL}]$) mit dem anderen Messwertwert ($\vartheta_{VL}$) des Messwertpaares ($[\vartheta_A;\vartheta_{VL}]$) verglichen und die Abweichung ($\Delta_{akt/est}$) anhand eines festgelegten Grenzwertes bewertetet wird.

3. Verfahren nach Anspruch 1 oder 2, **dadurch gekennzeichnet, dass** die Abweichung der neuen Schätzfunktion ($\vartheta_{VL,est\_neu}(\vartheta_A)$) zu der alten Schätzfunktion ($\vartheta_{VL,est\_neu}(\vartheta_A)$)durch Berechnung der mittleren quadratischen Abweichung ($\vartheta_{est\_alt/est\_neu}^2$) der Differenz der aus den beiden Schätzfunktionen ($\vartheta_{VL,est\_neu}(\vartheta_A)$, ($\vartheta_{VL,est\_alt}(\vartheta_A)$) berechneten Funktionswerte ($\vartheta_{VL,est}$) für einen Messwert ($\vartheta_A$) des Messwertpaares ($[\vartheta_A;\vartheta_{VL}]$) bestimmt wird.

4. Verfahren nach einem der vorhergehenden Ansprüche, **dadurch gekennzeichnet, dass** nach Inbetriebnahme, Einstellung oder Überprüfung einer Heizungseinlage eine Basis-Schätzfunktion ($\vartheta_{VL,est}(\vartheta_A)$) ermittelt und dauerhaft gespeichert wird.

5. Verfahren nach Anspruch 4, **dadurch gekennzeichnet, dass** die Abweichung (($\vartheta_{akt/est}$) eines neues Messwertpaares ($[\vartheta_A;\vartheta_{VL}]$) von der Basis-Schätzfunktion ($\vartheta_{VL,est}(\vartheta_A)$) und/oder die Abweichung ($\Delta_{est\_alt/est\_neu}^2$) einer neuen Schätzfunktion (($\vartheta_{VL,est\_neu}(\vartheta_A)$) von der Basis-Schätzfunktion ($\vartheta_{VL,est\_alt}(\vartheta_A)$) ermittelt wird.

6. Verfahren nach einem der vorhergehenden Ansprüche, **dadurch gekennzeichnet, dass** die Außentemperatur ($\vartheta_A$) in vorgegebene Außentemperaturintervalle eingeteilt wird.

7. Verfahren nach einem der vorhergehenden Ansprüche, **dadurch gekennzeichnet, dass** mehrere Schätzfunktionen ($\vartheta_{VL,est}(\vartheta_A)$) für unterschiedliche Zeitprofile und/oder Außentemperaturintervalle erstellt werden.

8. Verfahren nach einem der vorhergehenden Ansprüche, **dadurch gekennzeichnet, dass** eine Änderungsmitteilung erzeugt wird, wenn die Abweichung ($\Delta_{aks/est}$, $\Delta_{est\_alt/est\_neu}^2$) einen vorgebbaren Grenzwert überschreitet.

9. Verfahren nach einem der vorhergehenden Ansprüche, **dadurch gekennzeichnet, dass** eine mögliche Korrektur ($\Delta\vartheta_{Vorlauf}$) der Vorlauftemperatur ($\vartheta_{Vorlauf}$) durch eine der Heizungsregelung vorgeschaltete Vorlauftemperaturregelung berücksichtigt wird.

10. Verfahren nach einem der vorhergehenden Ansprüche, **dadurch gekennzeichnet, dass** die für Überwachung der Heizkurve benötigten Daten ($\vartheta_{Vorlauf}$, $\vartheta_A$, $\Delta\vartheta_{Vorlauf}$) an eine Zentrale übermittelt werden, welche die Überwachung vornimmt.

11. Vorrichtung zur Überwachung der Heizkurve einer Heizungsanlage mit einem Anschluss (2) zur Erfassung einer gemessenen Vorlauftemperatur ($\vartheta_{Vorlauf}$) und einer gemessenen Außentemperatur ($\vartheta_A$) und einer Recheneinrichtung (3), wobei die Recheneinrichtung (3) dazu eingerichtet ist, fortlaufend Wertepaare ($[\vartheta_A;\vartheta_{VL}]$) aus einer gemessenen Vorlauftemperatur ($\vartheta_{Vorlauf}$) und einer gemessenen Außentemperatur ($\vartheta_A$) zu bilden und eine Schätzfunktion ($\vartheta_{VL,est}(\vartheta_A)$) an eine ausgewählte Anzahl (*N*) von Wertepaaren ($[\vartheta_A;\vartheta_{VL}]$) anzupassen, **dadurch gekennzeichnet, dass** die Recheneinrichtung (3) weiter dazu eingerichtet ist, neue, nach Anpassung der Schätzfunktion gebildete Messwertpaare ($[\vartheta_A;\vartheta_{VL}]$ auf Kompatibilität mit der Schätzfunktion ($\vartheta_{VL,est}(\vartheta_A)$) zu überprüfen, wobei nach Bildung eines neuen Messwertpaares ($[\vartheta_A;\vartheta_{VL}]$) die Abweichung ($\Delta_{akt/est}$) des Messwertpaares ($[\vartheta_A;\vartheta_{VL}]$) von der Schätzfunktion ($\vartheta_{VL,est}(\vartheta_A)$) ermittelt wird und/oder nach Erreichen der ausgewählten Anzahl (*N*) neuer Messwertpaare ($[\vartheta_A;\vartheta_{VL}]$) eine neue Schätzfunktion ($\vartheta_{VL,est\_neu}(\vartheta_A)$) an die neuen Messwertpaare ($[\vartheta_A;\vartheta_{VL}]$) angepasst und die Abweichung ($\Delta_{est\_alt/est\_neu}^2$) der neuen Schätzfunktion ($\vartheta_{VL,est\_neu}(\vartheta_A)$) zu der alten Schätzfunktion ($\vartheta_{VL,est\_alt}(\vartheta_A)$) ermittelt wird.

## Claims

1. A method for monitoring the heating curve of a heating assembly, in which pairs of values ($[\vartheta_A;\vartheta_{VL}]$) are continuously formed from a measured flow temperature ($\vartheta_{Flow}$) and a measured outside temperature ($\vartheta_A$), and an estimating function ($\vartheta_{VL,est}(\vartheta_A)$) is adapted to a selected number (N) of pairs of values ($[\vartheta_A;\Delta_{VL}]$), **characterized in that** new pairs of measured values ($[\vartheta_A;\vartheta_{VL}]$) formed after adapting the estimating function ($\vartheta_{VL,est}(\vartheta_A)$) are checked for compatibility with the estimating function ($\vartheta_{VL,est}(\vartheta_A)$), wherein after forming a new pair of measured values ($[\vartheta_A; \vartheta_{VL}]$), the deviation ($\Delta_{act/est}$) of the pair of measured values ($[\vartheta_A;\vartheta_{VL}]$) from the estimating function ($\vartheta_{VL,est}(\vartheta_A)$) is determined and/or after reaching the selected number (N) of new pairs of measured values ($[\vartheta_A;\vartheta_{VL}]$), a new estimating function ($\vartheta_{VL,est\_new}(\Delta_A)$) is adapted to the new pairs of measured values ($[\vartheta_A;\vartheta_{VL}]$), and the deviation ($\Delta_{est\_old/est\_new}^2$) of the new estimating function ($\vartheta_{VL,est\_new}(\vartheta_A)$) from the old estimating function ($\vartheta_{VL,est\_old}(\vartheta_A)$) is determined.

2. The method according to claim 1, **characterized in that** the function value ($\vartheta_{VL,est}$) of the estimating function ($\vartheta_{VL,est}(\vartheta_A)$) for a measured value ($\vartheta_A$) of the pair of measured values ($[\vartheta_A; \vartheta_{VL}]$) is compared to the other measured value ($\vartheta_{VL}$) of the pair of measured values ($[\vartheta_A;\vartheta_{VL}]$), and the deviation ($\Delta_{act/est}$) is evaluated based on a specified limit value.

3. The method according to claim 1 or claim 2, **characterized in that** the deviation of the new estimating function ($\vartheta_{VL,est\_new}(\vartheta_A)$ from the old estimating function ($\vartheta_{VL,est\_old}(\vartheta_A)$) is determined by calculating the mean square deviation ($\Delta_{est\_old/est\_new}^2$) of the difference of the function values ($\Delta_{VL,est}$) calculated from the two estimating functions ($\vartheta_{VL,est\_new}(\vartheta_A)$, $\vartheta_{VL,est\_old}(\vartheta_A)$ for a measured value ($\vartheta_A$) of the pair of measured values ($[\vartheta_A;\vartheta_{VL}]$).

4. The method according to any one of the preceding claims, **characterized in that** after start of operation, setting or checking a heating assembly, a base estimating function ($\vartheta_{VL,est}(\vartheta_A)$ is determined and permanently stored.

5. The method according to claim 4, **characterized in that** the deviation ($\Delta_{old/est}$) of a new pair of measured values ($[\vartheta_A;\vartheta_{VL}]$) from the base estimating function ($\vartheta_{VL,est}(\vartheta_A)$) and/or the deviation ($\Delta_{est\_old/est\_new}^2$) of a new estimating function ($\vartheta_{VL,est\_new}(\vartheta_A)$) from the base estimating function ($\vartheta_{VL,est-old}(\vartheta_A)$) is determined.

6. The method according to any one of the preceding claims, **characterized in that** the outer temperature ($\vartheta_A$) is

divided into predetermined outside temperature intervals.

7. The method according to any one of the preceding claims, **characterized in that** a plurality of estimating functions ($\vartheta_{VL,est}(\vartheta_A)$) for different time profiles and/or outside temperature intervals are created.

8. The method according to any one of the preceding claims, **characterized in that** a notification of change is generated when the deviation ($\Delta_{akt\_est}$, $\Delta_{est\_old/est\_new}^2$) exceeds a predeterminable limit value.

9. The method according to any one of the preceding claims, **characterized in that** a possible correction ($\Delta\vartheta_{Flow}$) of the flow temperature ($\vartheta_{Flow}$) is considered by a flow temperature controller upstream of the heating controller.

10. The method according to any one of the preceding claims, **characterized in that** the data ($\vartheta_{Flow}$, $\vartheta_A$, $\Delta\vartheta_{Flow}$) required for monitoring the heating curve are transmitted to a control centre which performs the monitoring.

11. A device for monitoring the heating curve of a heating assembly comprising a connection (2) for detecting a measured flow temperature ($\vartheta_{Flow}$) and a measured outside temperature ($\vartheta_A$), and a computing means (3), wherein the computing means (3) is set up to continuously form pairs of values ([$\vartheta_A;\vartheta_{VL}$]) from a measured flow temperature ($\vartheta_{Flow}$) and a measured outside temperature ($\vartheta_A$), and to adapt an estimating function ($\vartheta_{VL,est}(\vartheta A)$) to a selected number (N) of pairs of values ([$\vartheta_A;\vartheta_{VL}$]), **characterized in that** the computing means (3) is further set up to check new pairs of measured values ([$\vartheta_A;\vartheta_{VL}$]) formed after adapting the estimating function for compatibility with the estimating function ($\vartheta_{VL,est}(\vartheta_A)$), wherein after forming a new pair of measured values ([$\vartheta_A;\vartheta_{VL}$]), the deviation ($\Delta_{act/est}$) of the pair of measured values ([$\vartheta_A;\vartheta_{VL}$]) from the estimating function ($\vartheta_{VL,est}(\vartheta_A)$) is determined and/or, after reaching the selected number (N) of new pairs of measured values ([$\vartheta_A;\vartheta_{VL}$]), a new estimating function ($\vartheta_{VL,est\_new}(\vartheta_A)$) is adapted to the new pairs of measured values ([$\vartheta_A;\vartheta_{VL}$]), and the deviation ($\Delta_{est\_old/est\_new}^2$) of the new estimating function ($\vartheta_{VL,est\_new}(\vartheta_A)$) from the old estimating function ($\vartheta_{VL,est\_old}(\vartheta_A)$) is determined

**Revendications**

1. Procédé pour contrôler la courbe de chauffage d'une installation de chauffage, dans lequel des paires de valeur . ([$\vartheta_A$ ; $\vartheta_{VL}$]) sont formées à partir d'une température aller ($\vartheta_{aller}$) mesurée et d'une température extérieure ($\vartheta_A$) mesurée et une fonction approximative ($\vartheta_{VL,est}(\vartheta_A)$) est adaptée à un nombre (N) choisi de paires de valeurs ([$\vartheta_A$ ; $\vartheta_{VL}$]), **caractérisé en ce que** de nouvelles paires de valeurs mesurées ([$\vartheta_A;\vartheta_{VL}$]) formées après adaptation de la fonction d'estimation sont contrôlées au niveau de la compatibilité avec la fonction d'estimation ($\vartheta_{VL,est}(\vartheta_A)$), sachant que, après la formation d'une nouvelle paire de valeurs mesurées ([$\vartheta_A;\vartheta_{VL}$]), l'écart ($\Delta_{act/est}$) entre la paire de valeurs mesurées ([$\vartheta_A;\vartheta_{VL}$) et la fonction d'estimation ($\vartheta_{VL,est}(\vartheta_A)$) est déterminé et/ou après avoir atteint le nombre (N) choisi de nouvelles paires de valeurs mesurées ([$\vartheta_A;\vartheta_{VL}$])), une nouvelle fonction d'estimation ($\vartheta_{VL,est\_nouvelle}(\vartheta_A)$) est adaptée aux nouvelles paires de valeurs mesurées ([$\vartheta_A;\vartheta_{VL}$]), et l'écart ($\Delta_{est-ancienne/est\_nouvelle}^2$) entre la nouvelle fonction d'estimation ($\vartheta_{VL,est\_nouvelle}(\vartheta_A)$) et l'ancienne fonction d'estimation ($\vartheta_{VL,est\_ancienne}(\vartheta_A)$) est déterminée.

2. Procédé selon la revendication 1, **caractérisé en ce que** la valeur de fonction ($\vartheta_{VL,est}$) de la fonction d'estimation ($\vartheta_{VL,est}(\vartheta_A)$) pour une valeur mesurée ($\vartheta_A$) de la paire de valeurs mesurées ([$\vartheta_A;\vartheta_{VL}$]) est comparée avec l'autre valeur mesurée ($\vartheta_{VL}$) de la paire de valeurs mesurées ([$\vartheta_A;\vartheta_{VL}$]) et l'écart ($\Delta_{act/est}$) est évalué à l'aide d'une valeur limite fixée.

3. Procédé selon la revendication 1 ou 2, **caractérisé en ce que** l'écart entre la nouvelle fonction d'estimation ($\vartheta_{VL,est\_nouvelle}(\vartheta_A)$) et l'ancienne fonction d'estimation ($\vartheta_{VL,est\_ancienne}(\vartheta_A)$) est déterminée par le calcul de l'écart quadratique moyen ($\Delta_{est\_ancienne/est\_nouvelle}^2$) de la différence des valeurs de fonction ($\vartheta_{VL,est}$) calculées à partir de deux fonctions d'estimation ($\vartheta_{VL,est\_nouvelle}(\vartheta_A)$ $\vartheta_{VL,est\_ancienne}(\vartheta_A)$) pour une valeur mesurée ($\vartheta_A$) de la paire de valeurs mesurées ([$\vartheta_A$ ; $\vartheta_{VL}$]).

4. Procédé selon l'une des revendications précédentes, **caractérisé en ce que**, après la mise en service, le réglage ou le contrôle d'une installation de chauffage, une fonction d'estimation de base ($\vartheta_{VL,est}(\vartheta_A)$) est déterminée et stockée de façon permanente.

5. Procédé selon la revendication 4, **caractérisé en ce que** l'écart ($\Delta_{act/est}$) entre une nouvelle paire de valeurs mesurées ([$\vartheta_A$ ; $\vartheta_{VL}$]) et la fonction d'estimation de base ($\vartheta_{VL,est}(\vartheta A)$) et/ou l'écart ($\Delta_{est\_ancienne/est\_nouvelle}^2$) entre une nouvelle fonction d'estimation ($\vartheta_{VL,est\_nouvelle}(\vartheta_A)$) et la fonction d'estimation de base ($\vartheta_{VL,est-ancienne}(\vartheta_A)$) est dé-

terminé.

6. Procédé selon l'une des revendications précédentes, **caractérisé en ce que** la température extérieure ($\vartheta_A$) est divisée en intervalles prédéfinis de température extérieure.

7. Procédé selon l'une des revendications précédentes, **caractérisé en ce que** plusieurs fonctions d'estimation ($\vartheta_{VL,\,est}$ ($\vartheta_A$)) sont élaborées pour différents profils de temps et/ou intervalles de température extérieure.

8. Procédé selon l'une des revendications précédentes, **caractérisé en ce qu'**un message de variation est généré lorsque l'écart ($\Delta_{act/est}$, $\Delta_{est\_ancienne\,est\_nouvelle}{}^2$) dépasse une valeur limite prédéfinissable.

9. Procédé selon l'une des revendications précédentes, **caractérisé en ce qu'**une correction possible ($\Delta\vartheta_{aller}$) de la température aller ($\vartheta_{aller}$) est prise en compte par un réglage de température aller placé en amont du réglage de chauffage.

10. Procédé selon l'une des revendications précédentes, **caractérisé en ce que** les données ($\vartheta_{aller}$, $\vartheta_A$, $\Delta\vartheta_{aller}$) utilisées pour le contrôle de la courbe de chauffage sont transmises à une centrale qui effectue le contrôle.

11. Dispositif pour contrôler la courbe de chauffage d'une installation de chauffage avec un branchement (2) pour l'enregistrement d'une température aller ($\vartheta_{aller}$) mesurée et d'une température extérieure ($\vartheta_A$) mesurée et un appareil de calcul (3), l'appareil de calcul (3) étant équipé pour former de façon continue des paires de valeurs ([$\vartheta_A$ ;$\vartheta_{VL}$]) à partir d'une température aller mesurée ($\vartheta_{aller}$) et d'une température extérieure mesurée ($\vartheta_A$) et adapter une fonction d'estimation ($\vartheta_{VL,est}$ ($\vartheta_A$)) à un nombre (N) choisi de paires de valeurs ([$\vartheta_A$ ;$\vartheta_{VL}$]), **caractérisé en ce que** l'appareil de calcul (3) est équipé également pour contrôler la compatibilité de nouvelles paires de valeurs mesurées ([$\vartheta_A$ ; $\vartheta_{VL}$]), formées après l'adaptation de la fonction d'estimation, avec la fonction d'estimation ($\vartheta_{VL,est}(\vartheta_A)$), sachant, que après la formation d'une nouvelle paire de valeurs mesurées ([$\vartheta_A$ ;$\vartheta_{VL}$]), l'écart ($\Delta_{act/est}$) entre la paire de valeurs mesurées ([$\vartheta_A$ ;$\vartheta_{VL}$]) et la fonction d'estimation ($\vartheta_{VL,est}(\vartheta A)$) est déterminé, et/ou, après avoir obtenu le nombre (N) choisi de nouvelles paires de valeur mesurées ([$\vartheta_A$ ;$\vartheta_{VL}$]), une nouvelle fonction d'estimation ($\vartheta_{VL,est\_nouvelle}(\vartheta_A)$) est adaptée aux nouvelles paires de valeur mesurées ([$\vartheta_A$ ; $\vartheta_{VL}$]) et l'écart ($\Delta_{est\_ancienne/est\_nouvelle}{}^2$) entre la nouvelle fonction d'estimation ($\vartheta_{VL,est\_nouvelle}(\vartheta_A)$) et l'ancienne fonction d'estimation ($\vartheta_{VL,est\_ancienne}(\vartheta_A)$) est déterminé.

```
        ┌─────────────────────┐
        │       Start:         │
        │     Neue Daten       │
        └─────────────────────┘
                   │
                   ▼
        ┌─────────────────────┐
        │ Plausibilitäts-Prüfung │
        └─────────────────────┘
                   │
                   ▼
        ┌─────────────────────┐
        │    Korrektur der     │
        │  Vorlauftemperatur-  │
        │      Absenkung       │
        └─────────────────────┘
                   │
                   ▼
        ┌─────────────────────┐
        │    Zuordnung zu      │
        │  Außentemperatur-    │
        │      intervall       │
        └─────────────────────┘
                   │
                   ▼
        ┌─────────────────────┐
        │   Ermittlung der     │
        │   Messwerteanzahl    │
        └─────────────────────┘
                   │
                   ▼
              ◇─────────◇
             ╱ Messwerte- ╲          ┌─────────────────────┐
            ◇  anzahl > N?  ◇──Ja──▶│    Schätzung der     │
             ╲            ╱          │   Parameter der      │
              ◇─────────◇           │   Schätzfunktion     │
                   │                 └─────────────────────┘
                   │                            │
                   │                            ▼
                   │                 ┌─────────────────────┐
                   │                 │  Ereignisorientierte │
                   │                 │   Änderungsüber-     │
                   │                 │      wachung         │
                   │                 └─────────────────────┘
                   │                            │
                   ◀────────────────────────────┘
                   │
                   ▼
        ┌─────────────────────┐
        │      Messwert-       │
        │   Änderungsüber-     │
        │      wachung         │
        └─────────────────────┘
                   │
                   ▼
        ┌─────────────────────┐
        │        Ende          │
        └─────────────────────┘
```

Fig. 1

1

$$\vartheta_{Vorlauf}, \vartheta_A, \Delta\vartheta_{Vorlauf}$$

2

| 3 |

Änderungsmitteilung →

**Fig. 2**

**Vorlauftemperatur [°C]**

Kessel-Höchsttemperatur

abgesenkte
Heizkennlinie

korrigierte
Vorlauftemperatur

Heizkennlinie im
Ausgangszustand

**Außentemperatur [°C]**

Kessel-
Mindesttemperatur

**Fig. 3**

Fig. 4

Vorlauftemperatur [°C]

Außentemperatur [°C]

Fig. 5

Vorlauftemperatur [°C]

zweite Schätzfunktion

erste Schätzfunktion

Basis-Schätzfunktion

Außentemperatur [°C]

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1456727 B1
- EP 1645928 A1
- DE 3210428 A1
- EP 0632356 A1